# EUROPÄISCHE PATENTSCHRIFT

(11) **EP 3 814 983 B1**
(45) Veröffentlichungstag und Bekanntmachung des Hinweises auf die Patenterteilung: **01.10.2025**
(21) Anmeldenummer: 19759298.3
(22) Anmeldetag: 05.08.2019
(51) Int. Cl.: G06V 20/20

(54) **VISUALISIERUNGSEINRICHTUNG UND VERFAHREN ZUM VISUALISIEREN DES INNEREN ODER ÄUSSEREN EINES FAHRZEUGS**
VISUALIZATION DEVICE AND METHOD FOR VISUALIZING THE INTERIOR OR EXTERIOR OF A VEHICLE
ÉQUIPEMENT DE VISUALISATION ET PROCÉDÉ DESTINÉ À VISUALISER L'INTÉRIEUR OU L'EXTÉRIEUR D'UN VÉHICULE

(30) Priorität: 22.08.2018 DE 102018214210
(43) Veröffentlichungstag der Anmeldung: 05.05.2021
(73) Patentinhaber: Siemens Mobility GmbH, 81739 München (DE)
(72) Erfinder: KELLER, Bernd, 14476 Potsdam, OT Groß Glienicke (DE); PRADEL, Andreas, 10318 Berlin (DE); REGEN, Henrik, 10247 Berlin (DE)
(74) Vertreter: Siemens Patent Attorneys
(86) Internationale Anmeldenummer: PCT/EP2019/070997
(87) Internationale Veröffentlichungsnummer: WO 2020/038706

(56) Entgegenhaltungen:
- REGENBRECHT H ET AL: "Augmented reality projects in the automotive and aerospace industries", IEEE COMPUTER GRAPHICS AND APPLICATIONS, IEEE SERVICE CENTER, NEW YORK, NY, US, vol. 25, no. 6, 1 November 2005 (2005-11-01), pages 48 - 56, XP008118235, ISSN: 0272-1716, [retrieved on 20051107], DOI: 10.1109/MCG.2005.124

## Beschreibung

Die Erfindung betrifft Visualisierungseinrichtungen und Verfahren zum Visualisieren des Inneren oder Äußeren eines Fahrzeugs.

Eine Visualisierungseinrichtung mit den Merkmalen gemäß dem Oberbegriff des Patentanspruchs 1 und ein Verfahren mit den Merkmalen gemäß dem Oberbegriff des Patentanspruchs 9 sind aus der Druckschrift "Augmented reality projects in the automotive and aerospace industries" (Regenbrecht et al.; IEEE COMPUTER GRAPHICS AND APPLICATIONS, 20051101 IEEE SERVICE CENTER, NEW YORK, NY, US - ISSN 0272-1716; Vol:25, Nr:6, Seiten 48 - 56) bekannt.

Viele von heutzutage im Betrieb befindlichen Schienenfahrzeugen sind noch nicht mit dem europäischen Zugsicherungssystem ETCS kompatibel. Für viele Betreiber stellt sich daher die Aufgabe, bestehende Fahrzeuge nachzurüsten und ETCS-kompatibel zu machen; dies erfordert in der Regel die nachträgliche Integration von fahrzeugseitigen ETCS-Systemkomponenten. Bei den nachzurüstenden Komponenten kann es sich beispielsweise um Radarsensoren, unterhalb des Fahrzeuges anzuordnende Balisenantennen zum Auslesen von Gleisbalisen, Dachantennen, Komponentenschränke oder Baugruppenträger handeln, die innerhalb oder außerhalb des Fahrzeuges montiert werden müssen.

Für physisch bereits existierende Fahrzeuge ist es in der Regel notwendig, jeweils eine fahrzeugspezifische Integrationslösung für die Systemkomponenten zu definieren, zu bewerten und umzusetzen. Zu diesem Zwecke werden die bestehenden Fahrzeuge üblicherweise von Ausrüstungsfirmen vor Ort besichtigt, und die Integrationskonzepte werden am realen Objekt definiert.

An dieser Stelle setzt die Erfindung an und stellt sich die Aufgabe, insbesondere mit Blick auf die beschriebene Nachrüstproblematik, ein besonders geeignetes Verfahren zum Visualisieren des Inneren oder Äußeren eines Fahrzeugs und eine entsprechend geeignete Visualisierungseinrichtung anzugeben.

Diese Aufgabe wird bezüglich der Visualisierungseinrichtung erfindungsgemäß durch die Merkmale gemäß Patentanspruch 1 gelöst. Vorteilhafte Ausgestaltungen der erfindungsgemäßen Visualisierungseinrichtung sind in Unteransprüchen angegeben.

Ein wesentlicher Vorteil der erfindungsgemäßen Visualisierungseinrichtung ist darin zu sehen, dass diese in besonders einfacher Weise die Planung einer Nachrüstung eines Fahrzeugs mit einer Fahrzeugkomponente ermöglicht. Durch die erfindungsgemäß vorgesehene Bildung eines fiktiven Fahrzeugbilds, das ein reales Fahrzeug mit einer fiktiv hinzugefügten oder eingebauten Fahrzeugkomponente zeigt, lässt sich vor Ort in besonders effizienter Weise eine Nachrüstung planen.

Die Anzeigeeinrichtung kann in einer vorteilhaften Ausführungsform in einer Brille integriert oder durch eine Brille gebildet sein, die transparent oder teiltransparent ist und das reale Fahrzeug bzw. das reale Fahrzeugbild durch Durchlassen (Transmission) von Licht, das vom Fahrzeug selbst reflektiert, gestreut oder erzeugt wird, zeigt; in diesem Falle wird das fiktive Fahrzeugbild von der Anzeigeeinrichtung durch Einblenden der fiktiv ein- oder angebauten Fahrzeugkomponente(n) bzw. Überlagern mit dem Licht des realen Fahrzeugs gebildet.

Alternativ kann die Anzeigeeinrichtung in einer Brille integriert oder durch eine Brille gebildet sein, die intransparent ist und kein Licht von außen durchlässt; in diesem Falle wird von der Anzeigeeinrichtung das von der Recheneinrichtung errechnete Fahrzeugbild angezeigt.

Vorteilhaft ist es, wenn die Anzeigeeinrichtung das fiktive Fahrzeugbild - von technisch bedingten Verzögerungen bei der Berechnung des fiktiven Fahrzeugbilds abgesehen und bezogen auf die kameraseitige Erzeugung des realen Fahrzeugbildes - in Echtzeit anzeigt.

Auch ist es vorteilhaft, wenn die Recheneinrichtung dazu programmiert ist, im fiktiven Fahrzeugbild durch Farbgebung anzuzeigen, ob der Ein- oder Anbau der Fahrzeugkomponente an einer benutzerseitig vorgegebenen Ein- oder Anbaustelle möglich ist.

Alternativ oder zusätzlich kann in vorteilhafter Weise vorgesehen sein, dass die Recheneinrichtung dazu programmiert ist, anhand des Vermessungsdatensatzes und der Abmessungen der Fahrzeugkomponente zu prüfen, an welchen Ein- oder Anbaustellen im oder am Fahrzeug ein Ein- oder Anbau der Fahrzeugkomponente möglich wäre, und im fiktiven Fahrzeugbild die möglichen Ein- oder Anbaustellen anzuzeigen.

Die Kamera und die Anzeigeeinrichtung sind vorzugsweise in einer Augmented-Reality-Brille integriert.

Die Erfindung bezieht sich darüber hinaus auf ein Verfahren mit den Merkmalen gemäß Patentanspruch 9.

Bezüglich der Vorteile des erfindungsgemäßen Verfahrens sei auf die obigen Ausführungen im Zusammenhang mit der erfindungsgemäßen Visualisierungseinrichtung verwiesen.

Das fiktive Fahrzeugbild wird - von technisch bedingten Verzögerungen bei der Berechnung des fiktiven Fahrzeugbilds abgesehen und bezogen auf die Erfassung des realen Fahrzeugbildes - vorzugsweise in Echtzeit angezeigt.

Besonders vorteilhaft ist es, wenn die Fahrzeugkomponente eine Bedienkomponente, insbesondere eine Bedienkomponente im Führerstand des Fahrzeugs ist, und anhand des fiktiven Fahrzeugbilds geprüft wird, ob eine Bedienung der fiktiv im Fahrzeug installierten Bedienkomponente möglich ist und/oder ein oder mehrere vorgegebene ergonomische Mindestkriterien erfüllt werden.

Das fiktive Fahrzeugbild kann in vorteilhafter Weise zu einer entfernten Beobachtungsstelle, insbesondere über das Internet, übertragen und an der entfernten Beobachtungsstelle beobachtet werden.

Alternativ oder zusätzlich kann vorgesehen sein, dass das reale Fahrzeugbild zu einer entfernten Beobachtungsstelle, insbesondere über das Internet, übertragen wird, und an der ent-fernten Beobachtungsstelle das fiktive Fahrzeugbild erzeugt und anschließend beobachtet wird.

Die Erfindung wird nachfolgend anhand von Ausführungsbeispielen näher erläutert; dabei zeigen beispielhaft
- Figur 1: ein Ausführungsbeispiel für eine erfindungsgemäße Visualisierungseinrichtung, anhand derer ein Ausführungsbeispiel für das erfindungsgemäße Verfahren erläutert wird,
- Figur 2: ein Ausführungsbeispiel für eine erfindungsgemäße Visualisierungseinrichtung, bei der zusätzlich eine Vermessungseinrichtung vorhanden ist,
- Figur 3: ein Ausführungsbeispiel für eine erfindungsgemäße Visualisierungseinrichtung, die zusätzlich eine Schnittstelle zum Anschluss der Visualisierungseinrichtung an ein externes Datennetz, insbesondere das Internet, aufweist,
- Figur 4: ein Ausführungsbeispiel für eine erfindungsgemäße Visualisierungseinrichtung, bei der eine Kamera und eine Anzeigeeinrichtung in einer Augmented-Reality-Brille integriert sind,
- Figur 5: beispielhaft eine Bedienperson, die die Augmented Reality-Brille gemäß Figur 4 trägt und eine Unterseite eines Schienenfahrzeugs zwecks nachträglicher Installation einer Balisenantenne inspiziert, und
- Figur 6: ein Ausführungsbeispiel für ein fiktives Fahrzeugbild, das ein reales Schienenfahrzeug mit einer fiktiv angebrachten Balisenantenne an einer geeigneten Montageposition zeigt,
- Figur 7: ein Ausführungsbeispiel für ein fiktives Fahrzeugbild, das ein reales Schienenfahrzeug mit einer fik- tiv angebrachten Balisenantenne an einer ungeeigneten Montageposition zeigt, und
- Figur 8: ein Ausführungsbeispiel für eine erfindungsgemäße Visualisierungseinrichtung, bei der zusätzlich ein Simulationsmodul bzw. eine Simulationseinrichtung vorhanden ist.

In den Figuren werden der Übersicht halber für identische oder vergleichbare Komponenten stets dieselben Bezugszeichen verwendet.

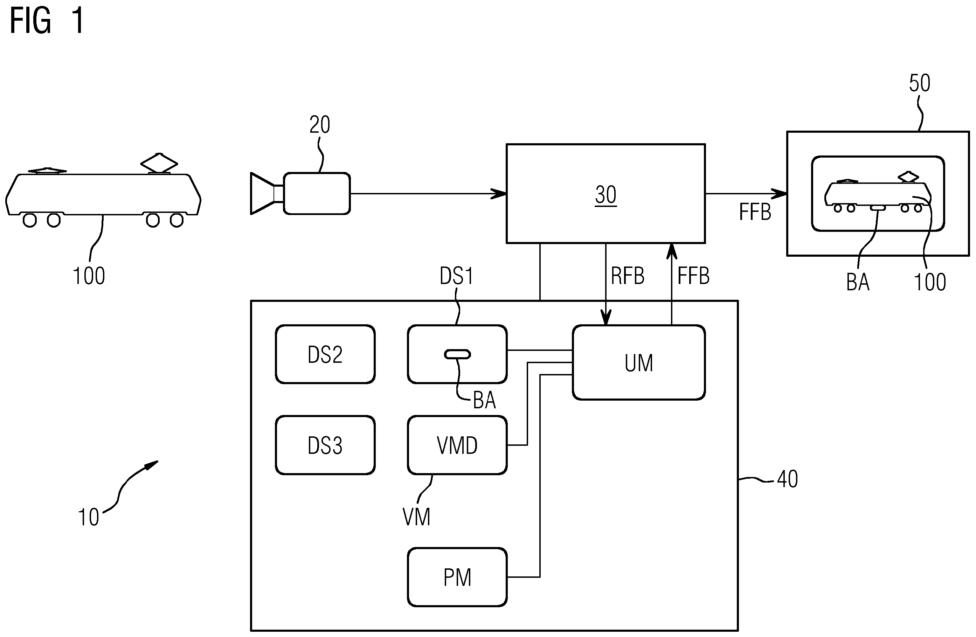

Die Figur 1 zeigt eine Visualisierungseinrichtung 10, die eine Kamera 20, eine Recheneinrichtung 30, einen Speicher 40 und eine Anzeigeeinrichtung 50 aufweist.

In dem Speicher 40 ist eine Vielzahl an Komponentendatensätzen DS1 bis DS3 abgespeichert, die jeweils eine zur nachträglichen Installation in oder an einem Fahrzeug geeignete Fahrzeugkomponente beschreiben, und zwar vorzugsweise zumindest hinsichtlich der mechanischen Abmessungen der jeweiligen Fahrzeugkomponente und hinsichtlich ggf. einzuhaltender Ein- und/oder Anbaubedingungen.

Einer der Komponentendatensätze, beispielsweise der Komponentendatensatz DS1, beschreibt eine ETCS-kompatible Balisenantenne BA, die zur nachträglichen Montage an einem Schienenfahrzeug geeignet ist.

In dem Speicher 40 ist darüber hinaus ein Überlagerungssoftwaremodul, nachfolgend kurz Überlagerungsmodul UM, abgespeichert. Das Überlagerungsmodul UM dient - bei Ausführung durch die Recheneinrichtung 20 - zur Überlagerung eines realen Bilds mit fiktiven Darstellungen einer oder mehrerer Fahrzeugkomponenten, die in den Datensätzen DS1 bis DS3 definiert sind.

Ein im Speicher 40 abgespeicherter Vermessungsdatensatz VM enthält Vermessungsdaten VMD, die auf einer räumlichen Vermessung von Fahrzeugen beruhen und sich beispielsweise auf das in der Figur 1 links dargestellte reale Schienenfahrzeug 100 beziehen. Der Vermessungsdatensatz VM und die darin enthaltenen Vermessungsdaten VMD ermöglichen dem Überlagerungsmodul UM eine besonders akkurate Darstellung fiktiver Fahrzeugkomponenten in oder an dem realen Schienenfahrzeug 100.

Die Visualisierungseinrichtung 10 gemäß Figur 1 wird zum Zwecke des Nachrüstens eines Fahrzeugs mit Fahrzeugkomponenten beispielweise wie folgt betrieben:
Die Kamera 20 nimmt ein reales Fahrzeugbild RFB auf, das beispielsweise das in der Figur 1 links dargstellte Schienenfahrzeug 100 abbildet, und übermittelt dieses an die Recheneinrichtung 30.

Bei Ausführung des Überlagerungsmoduls UM wird die Recheneinrichtung 30 das reale Fahrzeugbild RFB mit einer Darstellung zumindest einer benutzerseitig zur nachträglichen Montage ausgewählten Fahrzeugkomponente, die von einem der Datensätze DS1 bis DS3 beschrieben wird, unter Berücksichtigung von Maßstab und Perspektive überlagern. Durch die Überlagerung entsteht ein fiktives Fahrzeugbild FFB, das das reale Schienenfahrzeug 100 mit der oder den daran angebrachten Fahrzeugkomponenten zeigt. Das fiktive Fahrzeugbild FFB wird von der Anzeigeeinrichtung 50 der Visualisierungseinrichtung 10 angezeigt.

Bei dem Ausführungsbeispiel gemäß der Figur 1 wird beispielhaft davon ausgegangen, dass benutzerseitig die Balisenantenne BA als nachzurüstende Fahrzeugkomponente ausgewählt wurde; demgemäß zeigt das fiktive Fahrzeugbild FFB das Schienenfahrzeug 100 mit der an der benutzerseitig gewünschten Montageposition angebrachten Balisenantenne BA.

Zum Zwecke der Überlagerung des realen Fahrzeugbildes RFB mit der Abbildung der Balisenantenne BA liest das Überlagerungsmodul UM den entsprechenden Komponentendatensatz DS1 aus und wertet die darin enthaltenen Daten, insbesondere die Abmessungen und eine geeignete Balisenabbildung, aus. Außerdem greift das Überlagerungsmodul UM auf den Vermessungsdatensatz VM zu, in dem die Vermessungsdaten VMD des realen Schienenfahrzeugs 100 abgespeichert sind.

Unter Berücksichtigung der Abmessungen und der Balisenabbildung der Balisenantenne BA und der Vermessungsdaten VMD des Schienenfahrzeugs 100 kann das Überlagerungsmodul UM nun das fiktive Fahrzeugbild FFB bilden und das mit der Balisenantenne BA ausgestatte Schienenfahrzeug 100 auf der Anzeigeeinrichtung 50 anzeigen.

Die Überlagerung des realen Fahrzeugbilds RFB mit der Darstellung der Balisenantenne BA erfolgt vorzugsweise in Echtzeit, so dass während eines Betrachtens des realen Schienenfahrzeugs 100 und auch während einer Bewegung der Kamera 20 oder einem Schwenken der Kamera 20 gleichzeitig auch die fiktiv daran angebrachte Balisenantenne BA angezeigt werden kann.

Ein vorzugsweise ebenfalls im Speicher 40 enthaltenes Prüfmodul PM kann parallel eine Überprüfung dahingehend vornehmen, ob die von der Bedienperson der Visualisierungseinrichtung 10 ausgewählte Montageposition der Balisenantenne BA am realen Schienenfahrzeug 100 die in dem Komponentendatensatz DS1 enthaltenen Ein- und/oder Anbaubedingungen erfüllt und ein Ein- bzw. Anbau der Balisenantenne BA möglich ist.

Ist ein Ein-/Anbau der Balisenantenne BA am realen Schienenfahrzeug 100 an der bedienerseitig gewünschten Position nicht möglich oder zumindest nicht optimal, so wird das entsprechende Prüfergebnis vorzugsweise an das Überlagerungsmodul UM übermittelt, das in dem fiktiven Fahrzeugbild FFB bei der Darstellung der Balisenantenne BA, beispielsweise durch eine entsprechende Farbgestaltung, das festgestellte negative Prüfergebnis markiert.

Mit Blick auf eine hohe Bedienerfreundlichkeit der Visualisierungseinrichtung 10 wird es als vorteilhaft angesehen, wenn das Prüfmodul PM nicht nur eine Überprüfung der Ein- bzw. Anbaubarkeit einer ausgewählten Fahrzeugkomponente hinsichtlich eines benutzerseitig ausgewählten Montageorts durchführt, sondern darüber hinaus auch selbst ermittelt, in welcher Nachbarschaft des ausgewählten Montageorts eine Montage noch möglich wäre. Für eine Montage entsprechend geeignete Orte können beispielsweise in einer anderen Farbe markiert werden als solche Montageorte, die ungeeignet bzw. verboten sind.

Auch kann das Prüfmodul PM - unabhängig von benutzerseitig vorgeschlagenen Montageorten - selbsttätig Vorschläge für geeignete Montageorte ermitteln und diese in dem fiktiven Fahrzeugbild FFB anzeigen.

Im Falle einer nachträglichen Montage einer Balisenantenne BA können die in dem Komponentendatensatz DS1 abgespeicherten Ein- und/oder Anbaubedingungen beispielsweise berücksichtigen, dass Balisenantennen zum Empfangen und Senden elektromagnetischer Strahlung räumlich Freiräume aufweisen müssen, die einen Sende- und Empfangsbetrieb erlauben. Darüber hinaus können die Ein- und Anbaubedingungen berücksichtigen, dass Balisenantennen BA vorgegebene Mindestabstände von eisenhaltigen Komponenten einhalten müssen, damit letztgenannte das Senden und Empfangen elektromagnetischer Strahlung nicht stören.

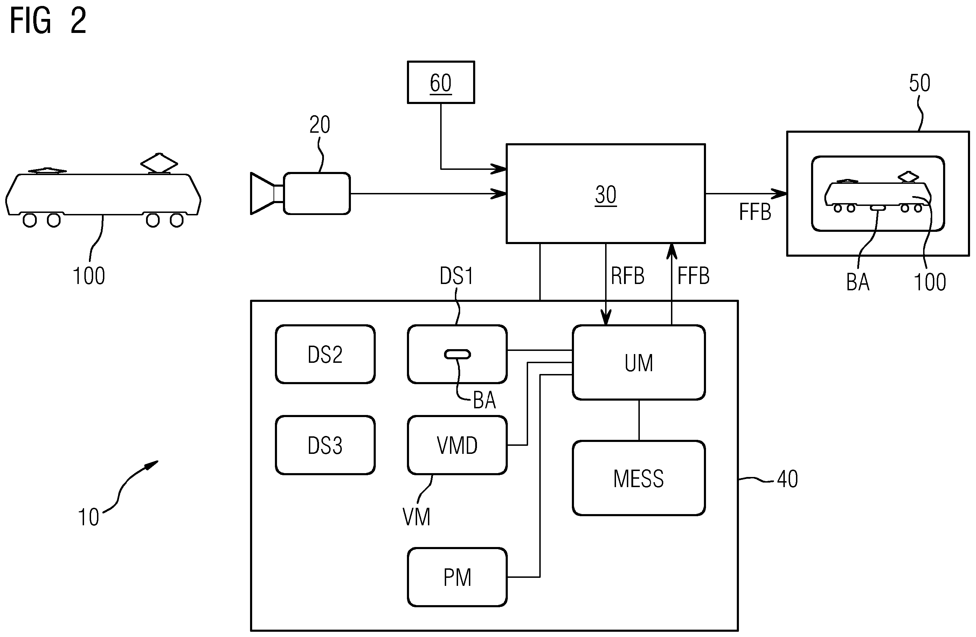

Die Figur 2 zeigt ein Ausführungsbeispiel für eine Visualisierungseinrichtung 10, bei der zusätzlich ein Vermessungssoftwaremodul, nachfolgend kurz Vermessungsmodul MESS genannt, vorhanden ist. Bei Ausführung des Vermessungsmoduls MESS durch die Recheneinrichtung 30 arbeitet die Recheneinrichtung 30 mit einer Scannvorrichtung 60 der Visualisierungseinrichtung 10 zusammen und führt eine dreidimensionale räumliche Vermessung des realen Schienenfahrzeugs 100 durch, sei dies von außen zur Erfassung der Außenhülle des realen Schienenfahrzeugs 100 oder von innen zur Erfassung des oder der Innenräume des realen Schienenfahrzeugs 100. Die von dem Vermessungsmodul MESS erfassten Vermessungsdaten VMD werden in dem Vermessungsdatensatz VM abgespeichert, so dass das Überlagerungsmodul UM auf eben diese Vermessungsdaten zurückgreifen kann, wie dies oben im Zusammenhang mit der Figur 1 erläutert worden ist.

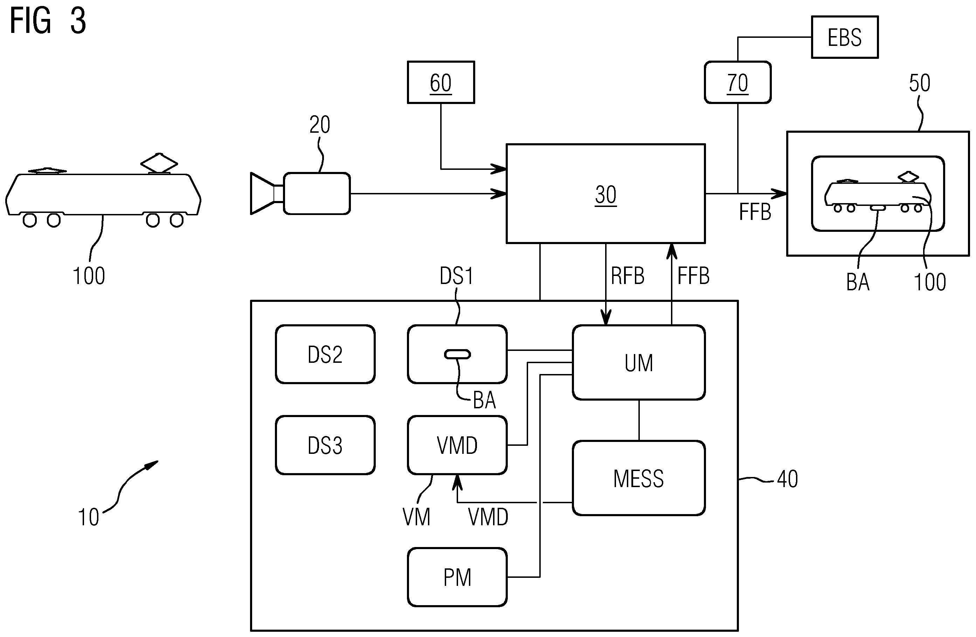

Die Figur 3 zeigt ein Ausführungsbeispiel für eine Visualisierungseinrichtung 10, die vom Aufbau her der Visualisierungseinrichtung 10 gemäß Figur 2 entspricht und darüber hinaus noch mit einer Schnittstelle 70 ausgestattet ist. Die Schnittstelle 70 ermöglicht eine Übertragung des von der Recheneinrichtung 30 bei Ausführung des Überlagerungsmoduls UM erzeugten fiktiven Fahrzeugbilds FFB an eine externe Beobachtungsstelle EBS. Eine Anzeige des fiktiven Fahrzeugbilds FFB ist also nicht nur an der Anzeigeeinrichtung 50 der Visualisierungseinrichtung 10 möglich, sondern darüber hinaus auch an der externen Beobachtungsstelle EBS.

Die Ausgestaltung gemäß Figur 3 hat den Vorteil, dass bei einer Beobachtung eines realen Schienenfahrzeugs vor Ort und einer fiktiven nachträglichen Ausstattung des realen Schienenfahrzeugs mit einer Fahrzeugkomponente das fiktive Ergebnis dieser Ausstattung nicht nur lokal auf der Anzeigeeinrichtung 50 der Visualisierungseinrichtung 10 angezeigt werden kann, sondern auch an anderer Stelle, beispielsweise an einem weit entfernten Planungs- oder Projektierungszentrum.

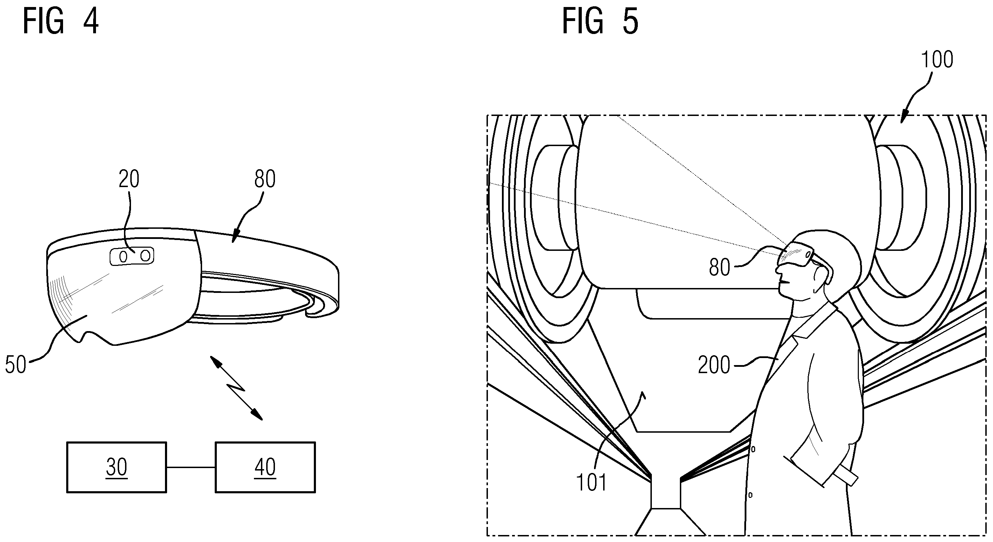

Die Figur 4 zeigt ein Ausführungsbeispiel für eine Visualisierungseinrichtung 10, bei der die Kamera 20 und die Anzeigeeinrichtung 50 in einer Augmented-Reality-Brille, nachfolgend AR-Brille 80 genannt, integriert sind und über Funk oder drahtgebunden mit der Recheneinrichtung 30 und dem Speicher 40 in Verbindung stehen. Eine die AR-Brille 80 gemäß Figur 4 tragende Bedienperson kann somit reale Fahrzeuge betrachten und diese virtuell bzw. fiktiv mit Fahrzeugkomponenten, die im Speicher 40 in Form von Komponentendatensätzen DS1-DS3 abgespeichert sind, ausstatten und sich das resultierende fiktiv nachgerüstete Fahrzeug in Echtzeit auf der AR-Brille 80 anzeigen lassen.

Die Figur 5 zeigt in einer schematischen Darstellung eine Bedienperson 200, die die AR-Brille 80 gemäß Figur 4 trägt und die Unterseite 101 des realen Schienenfahrzeugs 100 begutachtet.

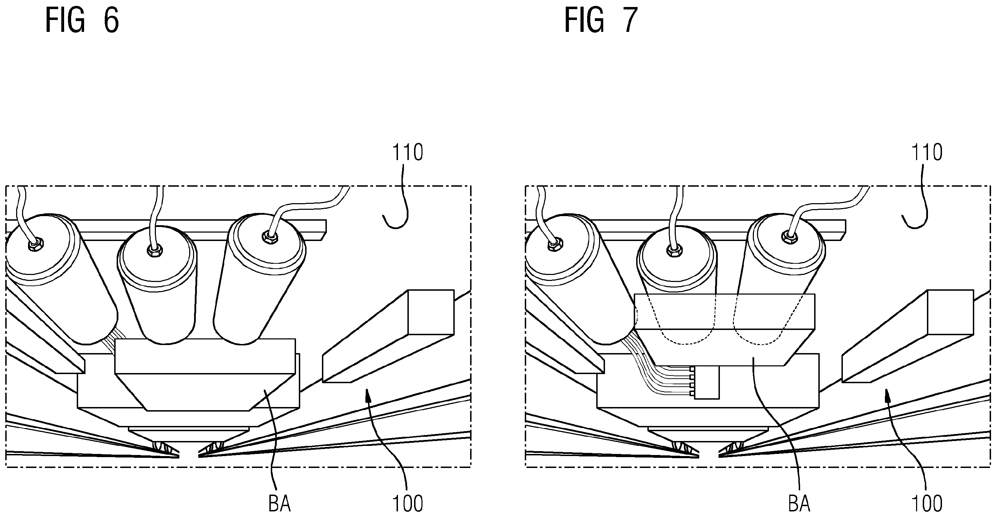

Die Figur 6 zeigt die Unterseite des Schienenfahrzeugs 100 gemäß Figur 5 nach einer virtuellen bzw. fiktiven Nachrüstung des Fahrzeugbodens mit einer Balisenantenne BA, wie dies im Zusammenhang mit den Ausführungsbeispielen gemäß Figur 1 bis 3 oben erläutert worden ist. Die Figur 6 zeigt dabei eine geeignete Montageposition für die Balisenantenne BA, bei der die Ein- und Anbaubedingungen für die Balisenantenne BA, wie sie im Komponentendatensatz DS1 des Speichers 40 definiert ist, erfüllt werden.

Die Figur 7 zeigt eine Montage der Balisenantenne BA an einer ungeeigneten Stelle. Die fehlende Eignung der Montagestelle für den Ein- bzw. Anbau der Balisenantenne BA wird in dem fiktiven Fahrzeugbild FFB beispielsweise durch eine entsprechende Farbgebung markiert.

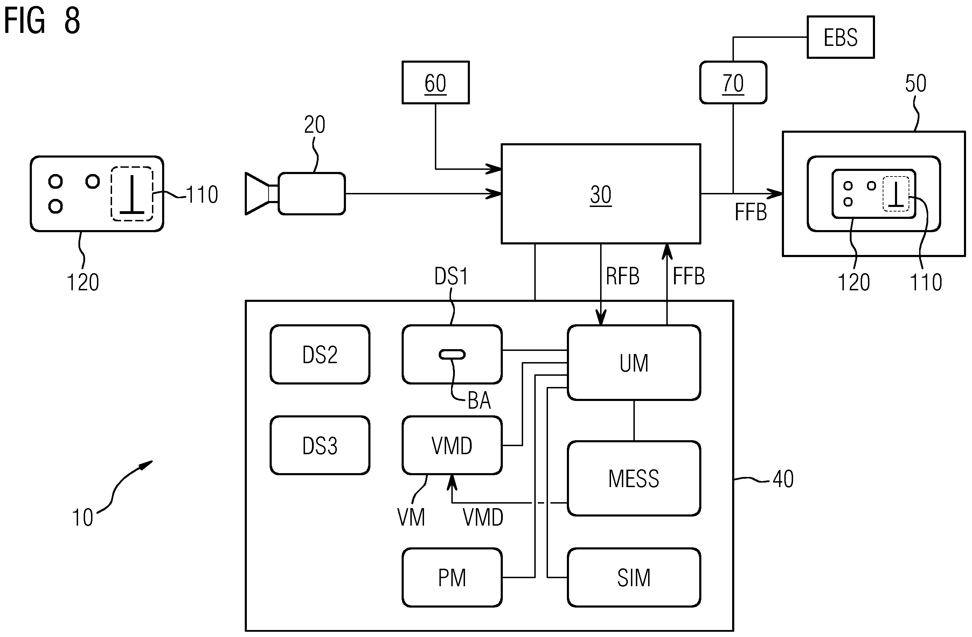

Handelt es sich bei einer nachzurüstenden Fahrzeugkomponente um eine Bedienkomponente 110, beispielsweise im Führerstand bzw. Cockpit 120 des Fahrzeugs, so ist es vorteilhaft, wenn im Speicher 40 ein Simulationsmodul SIM vorhanden ist, das in dem fiktiven Fahrzeugbild FFB eine fiktive Bedienung der fiktiv hinzugefügten Bedienkomponente 110 ermöglicht. Mit anderen Worten kann im Falle einer solchen Ausgestaltung die Bedienung des Fahrzeugs mit der Bedienkomponente 110 geprüft werden, obwohl dieses real im Fahrzeug noch nicht vorhanden ist. Eine solche Ausgestaltung der Visualisierungseinrichtung 10 mit einem Simulationsmodul SIM ist beispielhaft in der Figur 8 gezeigt.

Die oben im Zusammenhang mit den Figuren beschriebenen Ausführungsbeispiele basieren auf einem Einsatz der Augmented-Reality-Technologie in einer realen Fahrzeugumgebung und ermöglichen beispielsweise die Festlegung fahrzeugspezifischer Systemintegrationskonzepte live direkt auf bzw. in dem Schienenfahrzeug während einer Fahrzeugbesichtigung.

Durch den Effekt der Überlagerung der realen und virtuellen Umgebung erfolgt die Verschmelzung beider Realitäten. Live können die Komponenten im realen Schienenfahrzeug maßstäblich und perspektivisch angeordnet werden, die Position kann bewertet und dokumentiert werden. Die Positionierung der Komponenten im Fahrzeugumfeld erfolgt vorzugsweise anhand hinterlegter Randbedingungen der Systemkomponenten (wie z. B. mechanischer Einbaubedingungen, notwendiger Abstände, Wirkbereiche und Freiräume etc.). Der virtuelle Einbau der Komponenten ist vorzugsweise restriktiv nur im zulässigen Rahmen dieser Kriterien möglich.

Die Analyse der Wirkbereiche und Freiräume erfolgt vorzugweise umgehend anhand von Kollisionsanalysen der gescannten Umgebung (dem Abbild der virtuellen Umgebung) zu den neu ergänzten Einbaukomponenten. Die Ergebnisse dazu liegen live direkt in der Recheneinrichtung bzw. dem "Augmented Reality System" vor. Durchdringungen und Kollisionen der ergänzten Komponenten gegenüber vorhandenen Systemen und der vorhandenen Umgebung können angezeigt werden und es kann somit eine direkte Anpassung der Einbauposition erzwungen werden (z. B. Analyse der Radarstrahlenkegel zur vorhandenen Fahrzeugumgebung im Falle eines Balisenantenneneinbaus).

Auch kann die Verschmelzung der realen und virtuellen Umgebungen zur Analyse der Einbausituation in Interaktion zum menschlichen Körper genutzt werden, beispielsweise kann eine Analyse des Führerstands mit Blick auf Ergonomieaspekte durchgeführt werden.

Um den Eindruck der neuen Einbausituation besonders realistisch darzustellen, kann das Entfernen von vorhandenen Komponenten (Flächen und Körpern) im virtuell gescannten Bereich ermöglicht werden, um somit die zukünftige Einbausituation zu veranschaulichen.

Auch können von den ermittelten Einbausituationen Aufnahmen (Fotos, Videos, 3D-Modelle etc.) generiert werden.

Eingebettet wird die Augmented Technologie vorzugsweise in ein Ablaufprogramm, welches für jeden Einbau einer Fahrzeugkomponente strukturiert durchlaufen wird. Basis für diesen Ablauf der einzelnen Schritte kann ein hinterlegter Entscheidungsbaum sein. Somit kann sichergestellt werden, dass alle einzelnen notwendigen Aspekte und Kriterien im Zusammenhang mit dem Einbau der Fahrzeugkomponenten berücksichtigt werden.

Die virtuellen Ergebnisse und Lösungen werden vorzugsweise dokumentiert und können somit direkt als Ergebnisreport genutzt werden. Diese Dokumentation bzw. der Ergebnisreport kann direkt am Objekt durch Anmerkungen, Notationen, Kommentare etc. ergänzt werden.

Die Steuerung von Menüs zur Eingabe und Betätigung der Visualisierungseinrichtung bzw. zur Steuerung des Nachrüstungsverfahrens erfolgt vorzugsweise via Sprache bzw. Gesten.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen. Insbesondere können das oben beispielhaft beschriebene Verfahren und die beispielhaft beschriebene Visualisierungseinrichtung zur Nachrüstung auch bei anderen Fahrzeugen als Schienenfahrzeugen, also beispielsweise bei allen Arten von Landfahr-, Wasserfahr- oder Flugzeugen eingesetzt werden.

### Bezugszeichenliste

- 10: Visualisierungseinrichtung
- 20: Kamera
- 30: Recheneinrichtung
- 40: Speicher
- 50: Anzeigeeinrichtung
- 60: Scanvorrichtung
- 70: Schnittstelle
- 80: Augmented-Reality-Brille
- 100: Schienenfahrzeug
- 101: Unterseite
- 110: Bedienkomponente
- 120: Cockpit
- 200: Bedienperson

- BA: Balisenantenne
- DS1: Datensatz
- DS2: Datensatz
- DS3: Datensatz
- EBS: externe Beobachtungsstelle
- FFB: fiktives Fahrzeugbild
- MESS: Vermessungsmodul
- PM: Prüfmodul
- RFB: reales Fahrzeugbild
- SIM: Simulationsmodul
- UM: Überlagerungsmodul
- VM: Vermessungsdatensatz
- VMD: Vermessungsdaten

## Patentansprüche

1. Visualisierungseinrichtung (10), die umfasst:
- eine Kamera (20) zur zeitlich kontinuierlichen Erfassung des Umfelds und - bei Ausrichtung der Kamera (20) auf einen Innenraum oder die äußere Hülle eines realen Fahrzeugs - zur Erzeugung eines kameraausrichtungsabhängig veränderlichen, realen Fahrzeugbilds (RFB),
- einen Datenspeicher (40), in dem zumindest ein Komponentendatensatz (DS1, DS2, DS3) abgespeichert ist, der Daten enthält, auf deren Basis die visuelle Darstellung zumindest einer Fahrzeugkomponente möglich ist,
- eine Recheneinrichtung (30), die dazu programmiert ist,
die Darstellung der Fahrzeugkomponente unter Berücksichtigung von Maßstab und Perspektive in das reale Fahrzeugbild (RFB) einzufügen und ein fiktives Fahrzeugbild (FFB) zu erzeugen, das das reale Fahrzeug mit der fiktiv ein- oder angebauten Fahrzeugkomponente darstellt, und
- eine Anzeigeeinrichtung (50) zur Anzeige des fiktiven Fahrzeugbilds (FFB),
- wobei die Visualisierungseinrichtung (10) zusätzlich eine Vermessungseinrichtung aufweist, die eine räumliche Vermessung des Fahrzeugs und die Erstellung eines Vermessungsdatensatzes (VM) ermöglicht.
**dadurch gekennzeichnet, dass**
- der Komponentendatensatz (DS1, DS2, DS3) Abmessungen der Fahrzeugkomponente und zusätzlich zumindest eine zu erfüllende Ein- oder Anbaubedingung enthält,
- die Recheneinrichtung (30) dazu programmiert ist, das fiktive Fahrzeugbild (FFB) unter Berücksichtigung des Vermessungsdatensatzes (VM) und der Abmessungen der Fahrzeugkomponente zu erzeugen, und zwar mit Bezug auf eine benutzerseitig oder rechnerseitig vorgegebene Ein- oder Anbaustelle,
- die Recheneinrichtung (30) dazu programmiert ist unter Heranziehung des Vermessungsdatensatzes (VM) zu prüfen, ob für die vorgegebene Ein- oder Anbaustelle die Ein- oder Anbaubedingung erfüllt wird und der Ein- oder Anbau der Fahrzeugkomponente an der vorgegebenen Ein- oder Anbaustelle möglich ist, und
- die Recheneinrichtung (30) dazu programmiert ist, im fiktiven Fahrzeugbild (FFB) anzuzeigen, ob der Ein- oder Anbau der Fahrzeugkomponente an der vorgegebenen Ein- oder Anbaustelle möglich ist.

2. Visualisierungseinrichtung (10) nach Anspruch 1,
**dadurch gekennzeichnet, dass**
die Anzeigeeinrichtung (50) das fiktive Fahrzeugbild (FFB) - von technisch bedingten Verzögerungen bei der Berechnung des fiktiven Fahrzeugbilds (FFB) abgesehen und bezogen auf die kameraseitige Erzeugung des realen Fahrzeugbilds (RFB) - in Echtzeit anzeigt.

3. Visualisierungseinrichtung (10) nach einem der voranstehenden Ansprüche,
**dadurch gekennzeichnet, dass**
der Komponentendatensatz eine Balisenantenne (BA) beschreibt und Ein- und Anbaubedingungen für die Balisenantenne (BA) definiert.

4. Visualisierungseinrichtung (10) nach einem der voranstehenden Ansprüche,
**dadurch gekennzeichnet, dass**
die in dem Komponentendatensatz (DS1) abgespeicherten Ein- und/oder Anbaubedingungen berücksichtigen, dass die Balisenantenne zum Empfangen und Senden elektromagnetischer Strahlung räumlich Freiräume aufweisen muss, die einen Sende- und Empfangsbetrieb erlauben.

5. Visualisierungseinrichtung (10) nach einem der voranstehenden Ansprüche,
**dadurch gekennzeichnet, dass**
die in dem Komponentendatensatz (DS1) abgespeicherten Ein- und/oder Anbaubedingungen berücksichtigen, dass die Balisenantenne (BA) vorgegebene Mindestabstände von eisenhaltigen Komponenten einhalten müssen.

6. Visualisierungseinrichtung (10) nach einem der voranstehenden Ansprüche,
**dadurch gekennzeichnet, dass**
- die Fahrzeugkomponente eine nachzurüstende Bedienkomponente (110) im Führerstand des Fahrzeugs ist und
- im Datenspeicher (40) ein Simulationsmodul (SIM) vorhanden ist, das in dem fiktiven Fahrzeugbild (FFB) eine fiktive Bedienung der fiktiv hinzugefügten Bedienkomponente (110) ermöglicht, so dass die Bedienung des Fahrzeugs mit der Bedienkomponente (110) geprüft werden kann, obwohl dieses real im Fahrzeug noch nicht vorhanden ist.

7. Visualisierungseinrichtung (10) nach einem der voranstehenden Ansprüche,
**dadurch gekennzeichnet, dass**
- die Recheneinrichtung (30) dazu programmiert ist, im fiktiven Fahrzeugbild (FFB)durch Farbgebung anzuzeigen, ob der Ein- oder Anbau der Fahrzeugkomponente an der vorgegebenen Ein- oder Anbaustelle möglich ist und/oder
- die Recheneinrichtung (30) dazu programmiert ist, anhand des Vermessungsdatensatzes (VM) und der Abmessungen der Fahrzeugkomponente zu prüfen, an welchen Ein- oder Anbaustellen im oder am Fahrzeug ein Ein- oder Anbau der Fahrzeugkomponente möglich wäre, und im fiktiven Fahrzeugbild (FFB) die möglichen Ein- oder Anbaustellen anzuzeigen.

8. Visualisierungseinrichtung (10) nach einem der voranstehenden Ansprüche,
**dadurch gekennzeichnet, dass**
die Kamera (20) und die Anzeigeeinrichtung (50) in einer Augmented-Reality-Brille (80) integriert sind.

9. Verfahren zum Visualisieren des Inneren oder Äußeren eines Fahrzeugs,
wobei
- mit einer Kamera (20) zeitlich kontinuierlich ein Innenraum oder eine äußere Hülle eines realen Fahrzeugs unter Bildung eines realen Fahrzeugbilds (RFB) aufgenommen wird,
- aus einem in einem Datenspeicher (40) abgespeicherten Komponentendatensatz (DS1, DS2, DS3) Daten ausgelesen werden, auf deren Basis die visuelle Darstellung zumindest einer Fahrzeugkomponente möglich ist,
- die Darstellung der Fahrzeugkomponente unter Berücksichtigung von Maßstab und Perspektive in das reale Fahrzeugbild (RFB) eingefügt und ein fiktives Fahrzeugbild (FFB) erzeugt wird, das das reale Fahrzeug mit der fiktiv ein- oder angebauten Fahrzeugkomponente darstellt, und
- das fiktive Fahrzeugbild (FFB) angezeigt wird,
- wobei zusätzlich eine räumliche Vermessung des Fahrzeugs durchgeführt wird und die Erstellung eines Vermessungsdatensatzes (VM) erfolgt,
**dadurch gekennzeichnet, dass**
- der Komponentendatensatz (DS1, DS2, DS3) Abmessungen der Fahrzeugkomponente und zusätzlich zumindest eine zu erfüllende Ein- oder Anbaubedingung enthält,
- aus dem Komponentendatensatz (DS1, DS2, DS3) Abmessungen der Fahrzeugkomponente ausgelesen werden
- anhand des Vermessungsdatensatzes (VM) und der Abmessungen der Fahrzeugkomponente geprüft wird, ob für eine benutzerseitig oder rechnerseitig vorgegebene Ein- oder Anbaustelle die Ein- oder Anbaubedingung erfüllt wird und der Ein- oder Anbau der Fahrzeugkomponente an der vorgegebenen Ein- oder Anbaustelle möglich ist, und
- im fiktiven Fahrzeugbild (FFB) angezeigt wird, ob der Ein- oder Anbau der Fahrzeugkomponente an der vorgegebenen Ein- oder Anbaustelle möglich ist.

10. Verfahren nach Anspruch 9,
**dadurch gekennzeichnet, dass**
das fiktive Fahrzeugbild (FFB) - von technisch bedingten Verzögerungen bei der Berechnung des fiktiven Fahrzeugbilds (FFB) abgesehen und bezogen auf die Erfassung des realen Fahrzeugbilds (RFB) - in Echtzeit angezeigt wird.

11. Verfahren nach einem der voranstehenden Ansprüche 9 bis 10,
**dadurch gekennzeichnet, dass**
- der Komponentendatensatz eine Balisenantenne (BA) beschreibt und Ein- und Anbaubedingungen für die Balisenantenne (BA) definiert,
- wobei die in dem Komponentendatensatz (DS1) abgespeicherten Ein- und/oder Anbaubedingungen berücksichtigen, dass die Balisenantenne zum Empfangen und Senden elektromagnetischer Strahlung räumlich Freiräume aufweisen muss, die einen Sende- und Empfangsbetrieb erlauben.

12. Verfahren nach Anspruch 11,
**dadurch gekennzeichnet, dass**
die in dem Komponentendatensatz (DS1) abgespeicherten Ein- und/oder Anbaubedingungen berücksichtigen, dass die Balisenantenne (BA) vorgegebene Mindestabstände von eisenhaltigen Komponenten einhalten müssen.

13. Verfahren nach einem der voranstehenden Ansprüche 9 bis 12,
**dadurch gekennzeichnet, dass**
- die Fahrzeugkomponente eine Bedienkomponente (110), insbesondere eine Bedienkomponente (110) im Führerstand (120) des Fahrzeugs ist, und
- anhand des fiktiven Fahrzeugbilds (FFB) geprüft wird, ob eine Bedienung der fiktiv im Fahrzeug installierten Bedienkomponente (110) möglich ist und/oder ein oder mehrere vorgegebene ergonomische Mindestkriterien erfüllt werden.

14. Verfahren nach einem der voranstehenden Ansprüche 9 bis 13,
**dadurch gekennzeichnet, dass**
das fiktive Fahrzeugbild (FFB) zu einer entfernten Beobachtungsstelle (EBS), insbesondere über das Internet, übertragen wird und an der entfernten Beobachtungsstelle (EBS) beobachtet wird.

15. Verfahren nach einem der voranstehenden Ansprüche 9 bis 14,
**dadurch gekennzeichnet, dass**
- das reale Fahrzeugbild (FFB) zu einer entfernten Beobachtungsstelle (EBS), insbesondere über das Internet, übertragen wird, und
- an der entfernten Beobachtungsstelle (EBS) das fiktive Fahrzeugbild (FFB) erzeugt und anschließend beobachtet wird.

## Claims

1. Visualisation device (10),
which comprises:
- a camera (20) for continuously recording the surroundings and, when the camera (20) is oriented towards an interior or the exterior shell of a real vehicle, for generating a real vehicle image (RFB) which can change depending on the camera orientation,
- a data storage unit (40), in which at least one component data set (DS1, DS2, DS3) is stored, which contains data, on the basis of which the visual representation of at least one vehicle component is possible,
- a computing device (30), which is programmed to integrate the representation of the vehicle component into the real vehicle image (RFB) while taking into consideration the scale and perspective and to generate a virtual vehicle image (FFB) that represents the real vehicle with the virtually installed or attached vehicle component, and
- a display device (50) for displaying the virtual vehicle image (FFB),
- wherein the visualisation device (10) additionally has a measuring device, which enables a spatial measurement of the vehicle and the creation of a measuring data set (VM).
**characterised in that**
- the component data set (DS1, DS2, DS3) contains dimensions of the vehicle component and additionally at least one installation or attachment condition to be fulfilled,
- the computing device (30) is programmed to generate the virtual vehicle image (FFB) by taking into consideration the measuring data set (VM) and the dimensions of the vehicle component, namely with respect to an installation or attachment point which is predetermined on the user- or computer-side,
- the computing device (30) is programmed to check, using the measuring data set (VM), whether the installation or attachment condition is fulfilled for the predetermined installation or attachment point and the installation or attachment of the vehicle component is possible at the predetermined installation or attachment point, and
- the computing device (30) is programmed to show in the virtual vehicle image (FFB) whether the installation or attachment of the vehicle component is possible at the predetermined installation or attachment point.

2. Visualisation device (10) according to claim 1,
**characterised in that**
the display device (50) shows the virtual vehicle image (FFB) in real time, irrespective of delays for technical reasons in the calculation of the virtual vehicle image (FFB) and in relation to the camera-side generation of the real vehicle image (RFB).

3. Visualisation device (10) according to one of the preceding claims,
**characterised in that**
the component data set describes a balise antenna (BA) and defines installation and attachment conditions for the balise antenna (BA).

4. Visualisation device (10) according to one of the preceding claims,
**characterised in that**
the installation and/or attachment conditions stored in the component data set (DS1) take into consideration that the balise antenna for receiving and sending electromagnetic radiation must have spatial clearances which permit a send and receive operation.

5. Visualisation device (10) according to one of the preceding claims,
**characterised in that**
the installation and/or attachment conditions stored in the component data set (DS1) take into consideration that the balise antenna (BA) have to adhere to predetermined minimum distances from ferrous components.

6. Visualisation device (10) according to one of the preceding claims,
**characterised in that**
- the vehicle component is a control component (110) to be retrofitted in the driver's cab of the vehicle, and
- a simulation module (SIM) which permits a virtual control of the virtually added control component (110) in the virtual vehicle image (FFB) exists in the data storage unit (40), so that the control of the vehicle can be checked with the control component (110) although this is still not available as real in the vehicle.

7. Visualisation device (10) according to one of the preceding claims,
**characterised in that**
- the computing device (30) is programmed to show in the virtual vehicle image (FFB) by means of colouring, whether the installation or attachment of the vehicle component is possible at the predetermined installation or attachment point, and/or
- the computing device (30) is programmed to check, on the basis of the measuring data set (VM) and the dimensions of the vehicle component, the installation or attachment points in or on the vehicle at which an installation or attachment of the vehicle component would be possible, and to show the possible installation or attachment points in the virtual vehicle image (FFB) .

8. Visualisation device (10) according to one of the preceding claims,
**characterised in that**
the camera (20) and the display device (50) are integrated in augmented reality glasses (80).

9. Method for visualising the interior or exterior of a vehicle,
wherein
- an interior or an exterior shell of a real vehicle is recorded continuously with a camera (20) by forming a real vehicle image (RFB),
- data is read out from a component data set (DS1, DS2, DS3) stored in a data storage unit (40), on the basis of which the visual representation of at least one vehicle component is possible,
- the representation of the vehicle component is integrated into the real vehicle image (RFB) by taking into consideration the scale and perspective and a virtual vehicle image (FFB) is generated which represents the real vehicle with the virtually installed or attached vehicle component, and
- the virtual vehicle image (FFB) is shown,
- wherein additionally a spatial measurement of the vehicle is carried out and a measurement data set (VM) is created,
**characterised in that**
- the component data set (DS1, DS2, DS3) contains dimensions of the vehicle component and additionally at least one installation or attachment condition to be fulfilled,
- dimensions of the vehicle component are read out from the component data set (DS1, DS2, DS3),
- a check is carried out on the basis of the measurement data set (VM) and the dimensions of the vehicle component to determine whether the installation or attachment condition is fulfilled for an installation or attachment point which is predetermined on the user or computer side and the installation or attachment of the vehicle component is possible at the predetermined installation or attachment point, and
- it is shown in the virtual vehicle image (FFB) whether the installation or attachment of the vehicle component is possible at the predetermined installation or attachment point.

10. Method according to claim 9,
**characterised in that**
the virtual vehicle image (FFB) is shown in real time, irrespective of delays for technical reasons in the calculation of the virtual vehicle image (FFB) and in relation to the recording of the real vehicle image (RFB).

11. Method according to one of the preceding claims 9 to 10,
**characterised in that**
- the component data set describes a balise antenna (BA) and defines installation and attachment conditions for the balise antenna (BA),
- wherein the installation and/or attachment conditions stored in the component data set (DS1) take into consideration that the balise antenna for receiving and sending electromagnetic radiation has to have spatial clearances which permit a send and receive operation.

12. Method according to claim 11,
**characterised in that**
the installation and/or attachment conditions stored in the component data set (DS1) take into consideration that the balise antenna (BA) has to adhere to predetermined minimum distances from ferrous components.

13. Method according to one of the preceding claims 9 to 12,
**characterised in that**
- the vehicle component is a control component (110), in particular a control component (110) in the driver's cab (120) of the vehicle, and

14. Method according to one of the preceding claims 9 to 13,
**characterised in that**
the virtual vehicle image (FFB) is transmitted to a remote observation point (EBS), in particular by way of the Internet, and is observed at the remote observation point (EBS).

15. Method according to one of the preceding claims 9 to 14,
**characterised in that**
- the real vehicle image (FFB) is transmitted to a remote observation point (EBS), in particular by way of the Internet, and
- the virtual vehicle image (FFB) is generated at the remote observation point (EBS) and is then observed.

## Revendications

1. Equipement (10) de visualisation, qui comprend :
- une caméra (20) pour la saisie continuellement dans le temps de l'environnement et - en orientant la caméra (20) sur un espace intérieur ou sur la coque extérieure d'un véhicule réel - pour la production d'une image réelle du véhicule (RFB) se modifiant en fonction de l'orientation de la caméra,
- une mémoire (40) de données, dans laquelle est mis en mémoire au moins un ensemble (DS1, DS2, DS3) de données de composant, qui contient des données, sur la base desquelles la représentation visuelle d'au moins un composant de véhicule est possible,
- un dispositif (30) informatique, qui est programmé pour ajouter, dans l'image réelle du véhicule (RFB) en tenant compte de la perspective et de l'échelle, la représentation du composant du véhicule et pour produire une image fictive du véhicule (FFB), qui représente le véhicule réel avec le composant du véhicule inséré ou ajouté fictivement, et
- un dispositif (50) d'affichage pour l'affichage de l'image fictive du véhicule (FFB),
- dans lequel l'équipement (10) de visualisation a en outre un dispositif d'équerrage, qui rend possible un équerrage spatial du véhicule et l'établissement d'un ensemble (VM) de données d'équerrage,
**caractérisé en ce que**
- l'ensemble (DS1, DS2, DS3) de données de composant, contient des dimensions du composant du véhicule et en outre au moins une condition d'insertion ou d'ajout à satisfaire,
- le dispositif (30) informatique est programmé pour produire l'image fictive du véhicule (FFB) en tenant compte de l'ensemble (VM) de données d'équerrage et des dimensions du composant du véhicule, et cela en se rapportant à une position d'insertion ou d'ajout donnée à l'avance par l'utilisateur ou par l'informatique,
- le dispositif (30) informatique est programmé pour contrôler en tirant parti de l'ensemble (VM) de données d'équerrage, si pour l'emplacement d'insertion ou d'ajout donné à l'avance, la condition d'insertion ou d'ajout est satisfaite, et si l'insertion ou l'ajout du composant du véhicule à l'endroit d'insertion ou d'ajout donné à l'avance est possible, et
- le dispositif (30) informatique est programmé pour afficher, dans l'image fictive du véhicule (FFB), si l'insertion ou l'ajout du composant du véhicule est possible à l'emplacement d'insertion ou d'ajout donné à l'avance.

2. Equipement (10) de visualisation suivant la revendication 1,
**caractérisé en ce que**
le dispositif (50) d'affichage indique en temps réel l'image fictive du véhicule (FFB) - abstraction faite de retards dus à la technique lors du calcul de l'image fictive du véhicule (FFB) et rapportée à la production du côté de la caméra de l'image réelle du véhicule (RFB)-.

3. Equipement (10) de visualisation suivant l'une des revendications précédentes,
**caractérisé en ce que**
l'ensemble de données de composant décrit une antenne (BA) de balise et définit des conditions d'insertion et d'ajout de l'antenne (BA) de balise.

4. Equipement (10) de visualisation suivant l'une des revendications précédentes,
**caractérisé en ce que**
les conditions d'insertion et/ou d'ajout mises en mémoire dans l'ensemble (DS1) de données de composant prennent en compte que l'antenne de balise doit avoir, pour la réception et l'émission du rayonnement électromagnétique, des espaces libres, qui permettent un fonctionnement en émission ou en réception.

5. Equipement (10) de visualisation suivant l'une des revendications précédentes,
**caractérisé en ce que**
les conditions d'insertion ou d'ajout mises en mémoire dans l'ensemble (DS1) de données de composant prennent en compte que l'antenne (BA) de balise doit respecter des distances minimum données à l'avance à des composants contenant du fer.

6. Equipement (10) de visualisation suivant l'une des revendications précédentes,
**caractérisé en ce que**
- le composant du véhicule est un composant (110) de commande, dont la cabine du conducteur du véhicule doit être équipée après coup,
- dans la mémoire (40) de données, il y a un module (SIM) de simulation, qui rend possible, dans l'image fictive du véhicule (FFB), une commande fictive du composant (110) de commande ajoutée fictivement, de sorte que la commande du véhicule peut être contrôlée par le composant (110) de commande, bien que celui-ci en réalité ne soit pas encore présent dans le véhicule.

7. Equipement (10) de visualisation suivant l'une des revendications précédentes,
**caractérisé en ce que**
- le dispositif (30) informatique est programmé pour afficher, par coloration dans l'image fictive du véhicule (FFB), si l'introduction ou l'ajout du composant du véhicule est possible aux emplacements d'insertion ou d'ajout donnés à l'avance et/ou
- le dispositif (30) informatique est programmé pour contrôler, à l'aide de l'ensemble (VM) de données d'équerrage et des dimensions du composant du véhicule, à quel endroit d'insertion ou d'ajout, dans ou sur le véhicule, une insertion ou un ajout du composant du véhicule serait possible, et pour afficher, dans l'image fictive du véhicule (FFB), les emplacements d'insertion ou d'ajout possibles.

8. Equipement (10) de visualisation suivant l'une des revendications précédentes,
**caractérisé en ce que**
la caméra (20) et le dispositif (50) d'affichage sont intégrés dans des lunettes (80) à réalité augmentée.

9. Procédé de visualisation de l'intérieur ou de l'extérieur d'un véhicule,
dans lequel,
- par une caméra (20), on enregistre continuellement dans le temps un espace intérieur ou une coque extérieure d'un véhicule réel en formant une image réelle du véhicule (RFB),
- on lit, dans un ensemble (DS1, DS2, DS3) de données de composant mis en mémoire dans une mémoire (40) de données, des données sur la base desquelles la représentation visuelle d'au moins un composant du véhicule est possible,
- on insère la représentation du composant du véhicule, en tenant compte de l'échelle et de la perspective, dans l'image réelle du véhicule (RFB) et on produit une image fictive du véhicule (FFB), qui représente le véhicule réel avec le composant du véhicule inséré ou ajouté fictivement, et
- on affiche l'image fictive du véhicule (FFB),
- dans lequel en outre on effectue un équerrage spatial du véhicule et on établit un ensemble (VM) de données d'équerrage,
**caractérisé en ce que**
- l'ensemble (DS1, DS2, DS3) de données de composant contient des dimensions du composant du véhicule et en outre au moins une condition d'insertion ou d'ajout à satisfaire,
- à partir de l'ensemble (DS1, DS2, DS3) de données de composant, on lit des dimensions du composant du véhicule,
- à l'aide de l'ensemble (VM) de données d'équerrage et des dimensions du composant du véhicule, on contrôle si, pour un emplacement d'insertion ou d'ajout donné à l'avance par l'utilisateur ou par l'informatique, la condition d'insertion ou d'ajout est satisfaite, et si l'insertion ou l'ajout du composant du véhicule à l'emplacement d'insertion ou d'ajout donné à l'avance est possible, et
- on affiche, dans l'image fictive du véhicule (FFB), si l'insertion ou l'ajout du composant du véhicule est possible à l'emplacement d'insertion ou d'ajout donné à l'avance.

10. Procédé suivant la revendication 9,
**caractérisé en ce que**
l'on affiche en temps réel l'image fictive du véhicule (FFB) - abstraction faite des retards dus à la technique lors du calcul de l'image fictive du véhicule (FFB) et rapportée à la prise de l'image réelle du véhicule (RFB)-.

11. Procédé suivant l'une des revendications 9 à 10 précédentes, **caractérisé en ce que**
- l'ensemble de données de composant décrit une antenne (BA) de balise et définit des conditions d'insertion et d'ajout de l'antenne (BA) de balise,
- dans lequel les conditions d'insertion et/ou d'ajout mises en mémoire dans l'ensemble (DS1) de données de composant prennent en compte que l'antenne de balise doit avoir, pour la réception et l'émission du rayonnement électromagnétique, des espaces libres, qui permettent un fonctionnement en émission ou en réception.

12. Procédé suivant la revendication 11,
**caractérisé en ce que**
les conditions d'insertion ou d'ajout mises en mémoire dans l'ensemble (DS1) de données de composant prennent en compte que l'antenne (BA) de balise doit respecter des distances minimum données à l'avance à des composants contenant du fer.

13. Procédé suivant l'une des revendications 9 à 12 précédentes, **caractérisé en ce que**
- le composant du véhicule est un composant (110) de commande, en particulier un composant (110) de commande dans la cabine (120) du conducteur du véhicule, et
- à l'aide de l'image fictive du véhicule (FFB), on contrôle, si une commande du composant (110) de commande installée fictivement dans le véhicule est possible et/ou si un ou plusieurs critères ergonomiques minimum donnés à l'avance sont satisfaits.

14. Procédé suivant l'une des revendications 9 à 13 précédentes, **caractérisé en ce que**
l'on transmet l'image fictive du véhicule (FFB) à un point (EBS) d'observation éloigné, notamment en passant par l'internet, et on l'observe au point (EBS) d'observation éloigné.

15. Procédé suivant l'une des revendications 9 à 14 précédentes, **caractérisé en ce que**
- l'on transmet l'image réelle du véhicule (FFB) à un point (EBS) d'observation éloigné, en passant en particulier par l'internet, et
- l'on produit, au point (EBS) d'observation éloigné, l'image fictive du véhicule (FFB) et ensuite on l'observe.
